# EUROPEAN PATENT SPECIFICATION

(11) **EP 3 790 312 B1**
(45) Date of publication and mention of the grant of the patent: **28.08.2024**
(21) Application number: 19800354.3
(22) Date of filing: 06.05.2019
(51) Int. Cl.: H04W 28/24, H04L 47/80

(54) **SERVICE QUALITY OF SERVICE NEGOTIATION METHOD AND APPARATUS**
VERFAHREN UND VORRICHTUNG ZUR DIENSTQUALITÄTSVERHANDLUNG EINES DIENSTES
PROCÉDÉ ET APPAREIL DE NÉGOCIATION DE QUALITÉ DE SERVICE DE SERVICE

(30) Priority: 09.05.2018 CN 201810439645
(43) Date of publication of application: 10.03.2021
(73) Proprietor: Huawei Cloud Computing Technologies Co., Ltd., Guizhou 550025 (CN)
(72) Inventor: XU, Bei, Shenzhen, Guangdong 518129 (CN); ZHANG, Yongjing, Shenzhen, Guangdong 518129 (CN)
(74) Representative: Gill Jennings & Every LLP
(86) International application number: PCT/CN2019/085644
(87) International publication number: WO 2019/214569

(56) References cited:
- CN-A- 1 852 384
- CN-A- 103 621 023
- CN-A- 103 621 023
- CN-A- 104 754 750
- US-A1- 2015 103 670
- US-A1- 2015 142 986
- US-B2- 9 094 943

## Description

### TECHNICAL FIELD

This application relates to a communications network, and in particular, to a service quality of service negotiation method and apparatus.

### BACKGROUND

With continuous development of intelligent terminals and networks, the terminals can process more application services. To better ensure application service quality, quality of service (Quality of Service, QoS) between an application server and a terminal needs to be negotiated. Currently, in a 3rd generation partnership project (3rd Generation Partnership Project, 3GPP) network, QoS can be set by using an internet (Internet Protocol, IP) 5-tuple (a source IP address, a source port, a destination IP address, a destination port, and a transport layer protocol) traffic flow (traffic flow). In other words, same IP 5-tuples correspond to same QoS.

However, according to the method in the prior art, different services use same QoS when IP 5-tuples are the same.

US2015103670 relates to method for processing QoS, application server, QoS control network element, and mobile network. US2015142986 relates to systems and methods for personalizing and/or tailoring a service interface.

### SUMMARY

This application provides a service quality of service negotiation method and apparatus, to resolve a problem in the prior art that services are not distinguished by using QoS.

The invention has been defined in the independent claims. Further specific technical features have been defined in the dependent claims.

In the quality of service negotiation method and apparatus provided in this application, the first device obtains the quality of service creation message sent by the application server, and creates, based on the quality of service creation message, the quality of service information associated with the service. The quality of service creation message includes the service identifier and the quality of service information corresponding to the service identifier. In this way, the service is associated with the quality of service, and different quality of service is used for different services.

### BRIEF DESCRIPTION OF DRAWINGS

FIG. 1 is an architectural diagram of a communications system;
FIG. 2 is a schematic flowchart of a service quality of service negotiation method according to an implementation of this application;
FIG. 3 is a schematic flowchart of a service quality of service negotiation method according to another implementation of this application;
FIG. 4 is a schematic flowchart of a service quality of service negotiation method according to another implementation of this application, this implementation has not been claimed as such;
FIG. 5 is a schematic flowchart of a service quality of service negotiation method according to yet another implementation of this application;
FIG. 6 is a schematic flowchart of a service quality of service negotiation method according to still yet another implementation of this application;
FIG. 7 is a schematic structural diagram of a service quality of service negotiation apparatus according to an implementation of this application;
FIG. 8 is a schematic structural diagram of a service quality of service negotiation apparatus according to another implementation of this application;
FIG. 9 is a schematic structural diagram of a service quality of service negotiation apparatus according to still another implementation of this application;
FIG. 10 is a schematic structural diagram of a service quality of service negotiation apparatus according to yet another implementation of this application;
FIG. 11 is a schematic structural diagram of a service quality of service negotiation apparatus according to still yet another implementation of this application;
FIG. 12 is a schematic structural diagram of a service quality of service negotiation apparatus according to a further implementation of this application;
FIG. 13 is a schematic structural diagram of a service quality of service negotiation apparatus according to a still further implementation of this application;
FIG. 14 is a schematic structural diagram of a service quality of service negotiation apparatus according to a yet further implementation of this application;
FIG. 15 is a schematic structural diagram of a service quality of service negotiation apparatus according to a still yet further implementation of this application; and
FIG. 16 is a schematic structural diagram of a service quality of service negotiation apparatus according to even yet another implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

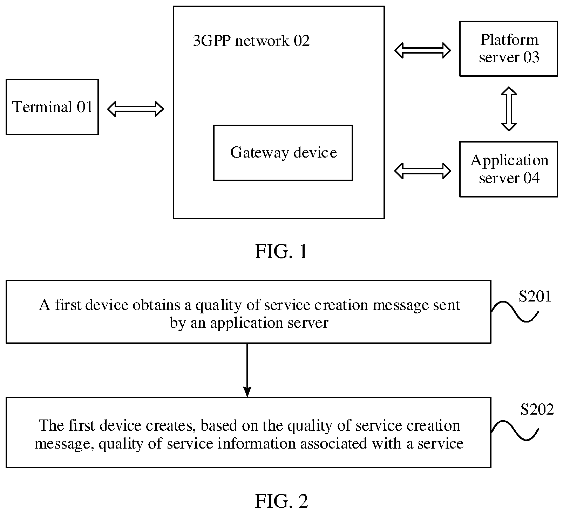

FIG. 1 is an architectural diagram of a communications system. As shown in FIG. 1, the system includes a terminal 01, a 3GPP network 02, and a platform server 03. Optionally, the system may further include an application server 04.

The system may be a narrowband internet of things (Narrowband Internet of Thing, NB-IoT) system, but is not limited thereto. The system may alternatively be another communications system.

The 3GPP network 02 may include a gateway device. The gateway device may be one or more of the following: a packet data network (PDN) gateway (PDN GateWay, P-GW), and a gateway general packet radio service (General Packet Radio Service, GPRS) support node (Gateway GPRS Support Node, GGSN), a service gateway (Serving Gateway, S-GW), or the like.

The application server 04 may be an application entity (Application Entity, AE). The platform server 03 may be a common service entity (Common Service Entity, CSE), or may be specifically a service capability server (Service Capability Server, SCS).

The terminal 01 may be an internet of things device, or may be another communications terminal such as a mobile phone or a tablet computer. This is not limited in this application.

Application programs implementing various functions may be installed on the terminal 01, and the application programs may communicate with the application server 04 by using a network.

FIG. 2 is a schematic flowchart of a service quality of service negotiation method according to an implementation of this application. As shown in FIG. 2, the method includes the following steps.

S201: A first device obtains a quality of service creation message sent by an application server.

The quality of service creation message includes a service identifier and quality of service information corresponding to the service identifier.

S202: The first device creates, based on the quality of service creation message, quality of service information associated with a service.

The first device may be a platform server or a terminal. In this application, one or more application servers may initiate quality of service creation, and the creation may be performed on the platform server or the terminal based on different implementations, so that QoS corresponding to different services may be used in subsequent services. Specifically, after subsequently receiving a service request, the first device may perform a service based on quality of service corresponding to the service.

In this implementation, the first device obtains the quality of service creation message sent by the application server, and creates, based on the quality of service creation message, the quality of service information associated with the service. The quality of service creation message includes the service identifier and the quality of service information corresponding to the service identifier. In this way, the service is associated with the quality of service, and different quality of service is used for different services.

Optionally, the quality of service information includes one or more of the following: a quality of service level, entity information (E2E Info) corresponding to the quality of service level, a time period (time Period) corresponding to the quality of service level, a traffic volume (traffic Volume) corresponding to the quality of service level, and an operation corresponding to a quality of service status (QoS Status). An entity in this application may be the foregoing terminal.

The E2E Info may be defined in Table 1:

**Table 1**

| Field name (Field Name) | Field type (Field Type) | Description |
|---|---|---|
| Direction (direction) | In: from an initiating entity to a destination entity | |
| | Out: from the destination entity to the initiating entity | |
| | In and out are included: from the initiating entity to the destination entity, and from the destination entity to the initiating entity | |
| Destination entity ID | Destination entity ID | |

The terminal that creates the quality of service information associated with the service may be the initiating entity or the destination entity.

The service identifier may be a service type identifier (resource Type).

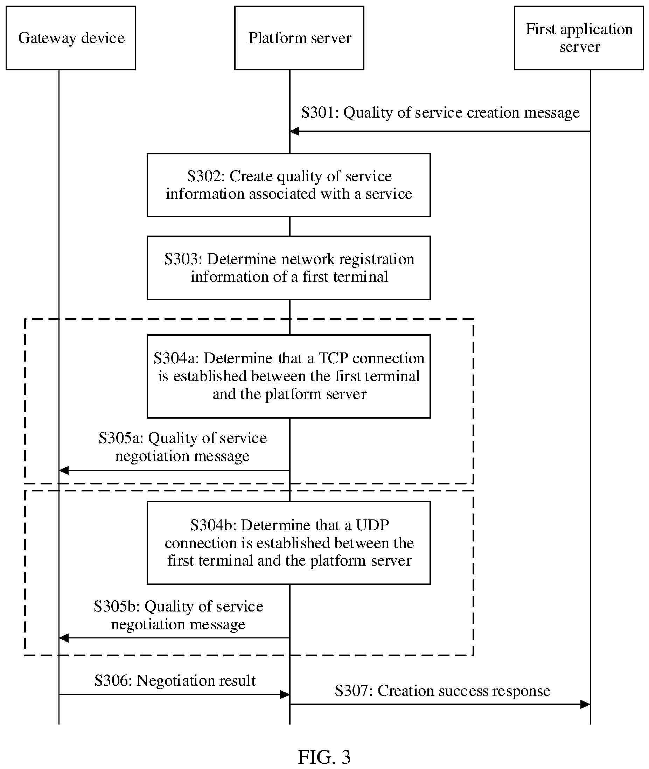

FIG. 3 is a schematic flowchart of a service quality of service negotiation method according to another implementation of this application.

When a first device is a platform server, after the first device creates, based on a quality of service creation message, quality of service information associated with a service, the first device determines network registration information of the first terminal, and then sends a quality of service negotiation message to a gateway device based on the network registration information of the first terminal.

The quality of service negotiation message includes quality of service information corresponding to a traffic flow.

The traffic flow herein may be a data flow, and is distinguished based on network information (for example, an IP 5-tuple). The network information does not include service information. To be specific, for the traffic flow, a service to which the data stream belongs is not specifically distinguished. In this application, during interaction with a network (for example, a gateway device), a current IP 5-tuple may still be used to distinguish a traffic flow, and a network side does not need to be reconfigured, so that the solution is easier to be implemented.

It should be noted that in this implementation, a terminal first registers with the platform server. Specifically, each terminal may have an account or an identifier (for example, an External ID) of the terminal, and the terminal sends a registration request to the platform server. The platform server may obtain network registration information of the terminal by using the registration request. The network registration information may include: the identifier (or the account) of the terminal, information about a network accessed by the terminal, and the like.

In addition, when different network protocol connections are used between the terminal and the platform server, quality of service negotiation is also different.

As shown in FIG. 3, the method includes the following steps.

S301: A first application server sends a quality of service creation message to the platform server.

The quality of service creation message is used by the first application server to request creation of quality of service information between the first terminal and the first application server. Similarly, the first application server may also request creation of quality of service information between another terminal and the first application server.

Alternatively, another application server may also request creation of quality of service information between the first terminal and the another application server.

Before S301, the first terminal has registered with the platform.

S302: The platform server creates, based on the quality of service creation message, quality of service information associated with a service.

S303: The platform server determines network registration information of the first terminal.

Specifically, the platform server may determine, based on the network registration information of the first terminal such as an identifier of the first terminal and access network information, a network with which the platform server needs to negotiate. For example, the network registration information is alternatively internet protocol (IP) 5-tuple information between the first application server and the first terminal.

As shown in Table 2, the IP 5-tuple information between the first application server and the first terminal is as follows:

**Table 2**

| Source | Destination | Direction | Source IP | Source port | Destination IP | Destination port | Internet protocol |
|---|---|---|---|---|---|---|---|
| First application server | First terminal | Out | Platform server IP | Platform server port 1 | First terminal IP | First terminal port 1 | UDP/TCP |

For a transmission control protocol (Transmission Control Protocol, TCP) connection, S304a and S305a are performed.

S304a: The platform server determines that a TCP connection is established between the first terminal and the platform server.

It should be noted that the platform server first determines whether the TCP connection is established between the first terminal and the platform server. If the TCP connection is not established between the first terminal and the platform server, the platform server first initiates establishment of the TCP connection to the first terminal.

If the TCP connection has been established, a quality of service negotiation message can be directly sent. Optionally, the platform server invokes a 3GPP SCEF T8 interface, and performs quality of service negotiation by using an on-demand QoS application interface request message.

S305a: The platform server sends a quality of service negotiation message to the gateway device based on the network registration information of the first terminal.

The quality of service negotiation message includes quality of service information corresponding to a traffic flow.

To be specific, the platform server may perform QoS negotiation with a 3GPP network based on current IP 5-tuple information, and an existing transmission manner does not need to be changed, so that implementation is easier.

For a user datagram protocol (User Datagram Protocol, UDP) connection, S304b and S305b are performed.

S304b: The platform server determines that a UDP connection is established between the first terminal and the platform server.

S305b: The platform server sends a quality of service negotiation message to the gateway device based on the network registration information of the first terminal.

In other words, if the UDP connection is established, quality of service negotiation can be directly performed.

S306: The gateway device sends a negotiation result to the platform server.

Optionally, the negotiation result may be shown in Table 3:

**Table 3**

| Application layer information | API parameter (T8) |
|---|---|
| Operation: create, retrieve, update, and delete (CRUD) | Quality reference information (QoS Reference) |
| End to end information (E2E Info) | Description information of an application service flow: |
| | Direction |
| | Destination IP |
| | Destination port number |
| Initiator | Description information of an application service flow: |
| | Source IP |
| | Source port number |
| QoS level | QoS reference |
| Time period/Traffic volume | Time period/Total traffic volume (time period/traffic volume) |

S307: The platform server sends a creation success response to the first application server.

It should be noted that, it is assumed that a second application server sends a quality of service creation message to the platform server after S307, and the quality of service creation message is used by the second application server to request creation of quality of service information between the first terminal and the second application server. After creating quality of service information associated with a service, the platform server first determines whether the first terminal has been a destination entity of a service. If the first terminal has been a destination entity of a service, the platform server assigns another source port. For example, the source port in Table 2 is changed to a "platform server port 2". Further, the quality of service negotiation message is sent to the gateway device based on the network registration information of the first terminal. In this case, the source port in the IP 5-tuple information used as basis changes, as shown in Table 4:

**Table 4**

| Source | Destination | Direction | Source IP | Source port | Destination IP | Destination port | Internet protocol |
|---|---|---|---|---|---|---|---|
| Second application server | First terminal | Out | Platform server IP | Platform server port 2 | First terminal IP | First terminal port 1 | UDP/TCP |

If the first terminal is not yet used as a destination entity of a service, a procedure is performed in the same way as the foregoing procedure.

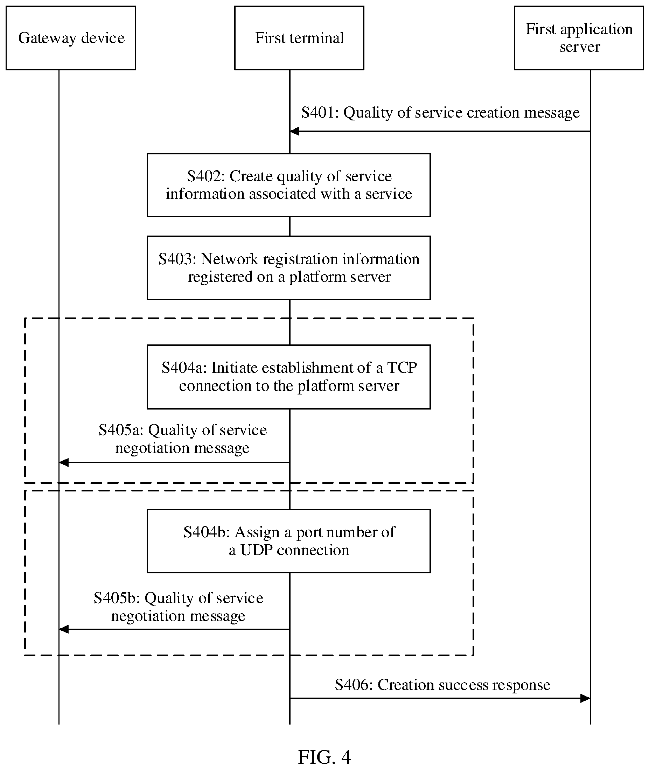

FIG. 4 is a schematic flowchart of a service quality of service negotiation method according to still another implementation of this application. This implementation has not been claimed as such.

When a first device is a first terminal, the first terminal also performs quality of service negotiation with a gateway device. Specifically, the method includes the following steps.

S401: The first terminal obtains a quality of service creation message sent by a first application server.

The quality of service creation message includes a service identifier and quality of service information corresponding to the service identifier.

S402: The first terminal creates, based on the quality of service creation message, quality of service information associated with a service.

Further, the first terminal performs quality of service negotiation with a 3GPP network. Specifically, the first terminal sends a quality of service negotiation message to the gateway device.

S403: The first terminal determines network registration information registered by the first terminal on a platform server.

The first terminal may send the registration information to the platform server before S403, to complete registration.

The network registration information may include information about a network accessed by the first terminal, and the like. Further, IP 5-tuple information of the network accessed by the first terminal may be determined, as shown in Table 5:

**Table 5**

| Source | Destination | Direction | Source IP | Source port | Destination IP | Destination port | Internet protocol |
|---|---|---|---|---|---|---|---|
| First application server | First terminal | Out | First terminal IP | First terminal port 1 | Platform server IP | Platform server port 1 | UDP/TCP |

For a TCP connection, S404a and S405a are performed.

S404a: The first terminal initiates, based on the quality of service creation message, establishment of the TCP connection to the platform server.

In other words, the first terminal re-assigns a new TCP connection to the platform.

S405a: The first terminal sends a quality of service negotiation message to the gateway device.

For a UDP connection, S404b and S405b are performed.

S404b: The first terminal assigns a port number of the UDP connection based on the quality of service creation message.

In other words, the first terminal re-assigns a UDP port between the first terminal and the platform server.

S405b: The first device sends a quality of service negotiation message to the gateway device.

The first terminal may invoke a bearer resource update request (Request Bearer Resource Modification) based on IP 5-tuple information of TCP/UDP. For example, the bearer resource update request includes: a bearer ID (LBI) of the connection, a process transaction identity (PTI), and an EPS bearer identity (EPS Bearer Identity), QoS, traffic aggregate description (TAD), and a protocol configuration option (Protocol Configuration Options). The TAD information includes negotiated IP 5-tuple information of a traffic flow, to negotiate and set quality of service information (Flow QoS) corresponding to the traffic flow.

S406: The first terminal sends a creation success response to the first application server.

It should be noted that a second application server may send a quality of service creation message to the first terminal, to create quality of service between the first terminal and the second application server. A specific execution procedure is similar to that shown in FIG. 4, and details are not described again.

Based on the foregoing implementation, in a process of QoS negotiation between the platform server and the gateway device, different processing needs to be performed based on a sleep state, connection information, and the like of a terminal.

Optionally, if the current terminal is in sleep state, the platform server caches a quality of service creation message, or returns error information to the application server, that is, does not negotiate with the gateway device.

If the current terminal is not in sleep state and has established a connection to the platform server, negotiation is performed according to the procedure in the implementation shown in FIG. 4.

If the current terminal is not in sleep state but has not established a connection to the platform server, a connection is established and then negotiation is performed. Optionally, the platform server initiates establishment of the connection. In other words, the platform server sends a connection establishment request to the terminal. After the terminal returns a connection response, negotiation is performed according to the procedure in the implementation shown in FIG. 4. Alternatively, the terminal initiates establishment of the connection. In other words, the terminal sends a connection establishment request to the platform server. After the platform server returns a connection response to the terminal, negotiation is performed according to the procedure in the implementation shown in FIG. 4.

Based on the foregoing implementation, after creating, based on the quality of service creation message, the quality of service information associated with the service, the first device may send a creation success response to the application server. Further, after receiving a service request, the first device negotiates with the 3GPP network.

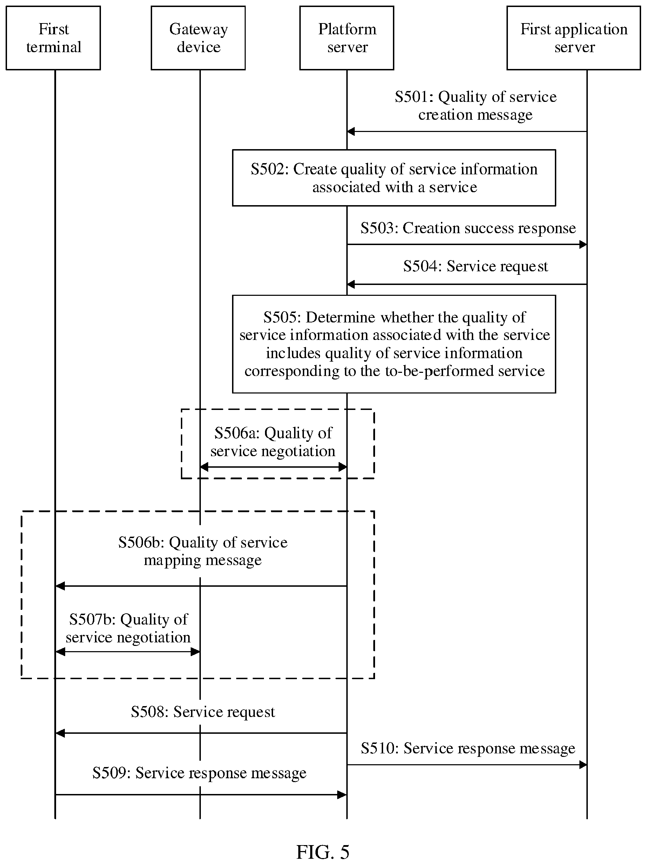

FIG. 5 is a schematic flowchart of a service quality of service negotiation method according to yet another implementation of this application.

Before a first device sends a quality of service negotiation message to a gateway device based on network registration information of the first terminal, the first device further receives a service request sent by an application server. The service request includes an identifier of a to-be-performed service. Further, the first device determines, based on the service request, whether quality of service information associated with a service includes quality of service information corresponding to the to-be-performed service. If the quality of service information associated with the service includes the quality of service information corresponding to the to-be-performed service, the first device sends the quality of service negotiation message to the gateway device based on the network registration information of the first terminal. Otherwise, an existing method may be used.

As shown in FIG. 5, the method includes the following steps.

S501: A platform server obtains a quality of service creation message sent by a first application server.

The quality of service creation message includes a service identifier and quality of service information corresponding to the service identifier.

S502: The platform server creates, based on the quality of service creation message, quality of service information associated with a service.

S503. The platform server sends a creation success response to the first application server.

S504: The first application server sends a service request to the platform server.

The service request includes an identifier of a to-be-performed service.

Specifically, the service request may further include an identifier of a source entity (an identifier of the first application server) and an identifier of a destination entity. The service request may be used to request a resource for operating the first terminal. In other words, a destination entity of the to-be-performed service may be the first terminal.

S505: The platform server determines whether the quality of service information associated with the service includes quality of service information corresponding to the to-be-performed service.

If the quality of service information associated with the service includes the quality of service information corresponding to the to-be-performed service, S506a/S506b is performed.

Specifically, if the created quality of service information associated with the service does not include a service corresponding to the first terminal, processing is still performed according to an existing procedure. To be specific, an association between a service and quality of service is not considered.

In an implementation, if the first application server subscribes to an association relationship (E2EQoS) between a service and QoS, an identifier of the first terminal in a request message is in the quality of service information that is associated with the service and that is created by the platform server, and a remote platform (a remote CSE) corresponding to the identifier of the first terminal in the request message does not have a sub-resource <E2EQoS>, the platform server determines QoS of the to-be-performed service based on the quality of service information associated with the service.

Alternatively, if the first application server subscribes to an association relationship (E2EQoS) between a service and QoS, an identifier of the first terminal in a request message is in the quality of service information that is associated with the service and that is created by the platform server, and a remote CSE corresponding to the identifier of the first terminal in the request message has a sub-resource <E2EQoS>, but an identifier (IN-AE) of the first application server is not in a destination entity identifier list of the remote CSE having the sub-resource <E2EQoS>, the platform server determines QoS of the to-be-performed service based on the quality of service information associated with the service.

It should be noted that <E2EQoS> may be used as a sub-resource of the three resources <remoteCSE>, <CSEBase>, and <AE>. Herein, it is determined whether <remote CSE> has the sub-resource <E2EQoS>.

<E2EQoS> has a target entity ID (target Entity ID), indicating that services of an application creating the QoS are all sent to a target entity. For example, the target entity ID is an identifier of a water meter, and <E2EQoS> indicates that all services sent to the water meter by an application server creating QoS should use the same QoS.

In another implementation, the first application server subscribes to an association relationship (E2EQoS) between a service and QoS, an identifier of the first terminal in a request message is in the quality of service information that is associated with the service and that is created by the platform server, a remote CSE corresponding to the identifier of the first terminal in the request message has a sub-resource <E2EQoS>, and the first application server is also in a destination entity identifier of the remote CSE having the sub-resource <E2EQoS>, indicating that QoS has been created between the terminal and the application server. In this case, the platform server compares the two pieces of QoS information (for example, compares whether each attribute of the QoS is the same): If the two pieces of QoS are the same and directions are the same, the platform server selects the QoS that is corresponding to the to-be-performed service and that is configured by the first application server; or if the two pieces of QoS are different but directions are the same, the platform server selects higher-level QoS; or if the two pieces of QoS are different and directions are different, the platform server needs to determine the QoS based on requests and responses, and negotiate QoS bearers with the 3GPP network.

Further, the platform server needs to perform QoS negotiation with the 3GPP network. The platform server may directly negotiate with the gateway device (S506a is performed), or may first notify the first terminal, and the first terminal negotiates with the gateway device (S506b and S507b).

S506a: The platform server performs quality of service negotiation with the gateway device.

To be specific, the platform server sends the quality of service negotiation message to the gateway device based on the network registration information of the first terminal. For a specific negotiation manner of a TCP/UDP connection, refer to the foregoing implementation, and details are not described herein again.

S506b: The platform server sends a quality of service mapping message to the first terminal, where the quality of service mapping message includes the QoS corresponding to the to-be-performed service.

S507b: The first terminal performs quality of service negotiation with the gateway device.

To be specific, the first terminal sends the quality of service negotiation message to the gateway device. For a specific negotiation manner of a TCP/UDP connection, refer to the foregoing implementation, and details are not described herein again.

After the negotiation is completed, the first terminal is instructed to perform the to-be-performed service.

S508: The platform server sends the service request to the first terminal.

The service request includes the identifier of the to-be-performed service.

S509: The first terminal sends a service response message to the platform server.

Specifically, the first terminal sends the service response message to the platform server based on the QoS corresponding to the to-be-performed service.

S510: The platform server sends the service response message to the first application server.

A difference from the foregoing implementation is that creation of quality of service may alternatively be initiated by a terminal in this implementation. Specifically, a terminal may initiate establishment of E2E QoS between the terminal and another terminal.

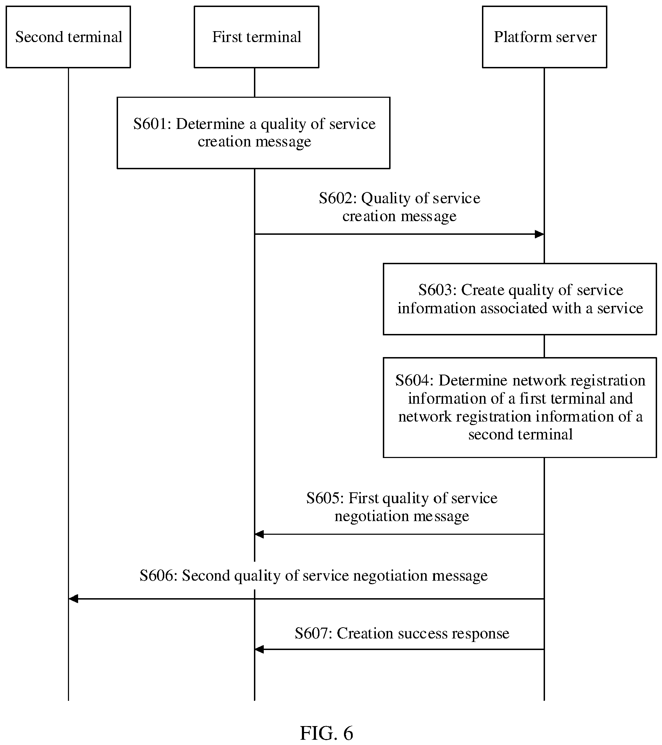

FIG. 6 is a schematic flowchart of a service quality of service negotiation method according to still yet another implementation of this application. As shown in FIG. 6, the method includes the following steps.

S601: A first terminal determines a quality of service creation message.

The quality of service creation message includes a service identifier and quality of service information corresponding to the service identifier, and the quality of service information is quality of service information between the first terminal and a second terminal.

S602: The first terminal sends the quality of service creation message to a platform server.

S603: The platform server creates, based on the quality of service creation message, quality of service information associated with a service.

Specifically, the quality of service information between the first terminal and the second terminal is created. The quality of service information between the first terminal and the second terminal may be used as a sub-resource of a remote CSE.

Then, the platform server performs QoS negotiation with a 3GPP network. For ease of implementation, an IP 5-tuple is still used for negotiation.

In an optional implementation, the platform server may split a negotiation message into two flows (flow) based on an identifier of the first terminal and an identifier of the second terminal that are in the quality of service creation message.

S604: The platform server determines network registration information of the first terminal and network registration information of the second terminal.

As shown in Table 6, IP 5-tuple information between the platform server and the first terminal is as follows:

**Table 6**

| Source | Destination | Direction | Source IP | Source port | Destination IP | Destination port | Internet protocol |
|---|---|---|---|---|---|---|---|
| First terminal | Platform server | Out | First terminal IP | First terminal port 1 | Platform server IP | Platform server port 1 | UDP/TCP |

As shown in Table 7, IP 5-tuple information between the platform server and the second terminal is as follows:

**Table 7**

| Source | Destination | Direction | Source IP | Source port | Destination IP | Destination port | Internet protocol |
|---|---|---|---|---|---|---|---|
| Platform server | Second terminal | In | Platform server IP | Platform server port 1 | Second terminal IP | Second terminal port 1 | UDP/TCP |

S605: The platform server sends, based on the network registration information of the first terminal, a first quality of service negotiation message to a gateway device corresponding to the first terminal.

To be specific, the platform server selects, based on the network registration information of the first terminal, a corresponding 3GPP network to perform negotiation.

S606: The platform server sends, based on the network registration information of the second terminal, a second quality of service negotiation message to a gateway device corresponding to the second terminal.

To be specific, the platform server selects, based on the network registration information of the second terminal, a corresponding 3GPP network to perform negotiation.

S605 and S606 may be performed simultaneously, or may be performed successively. This is not limited in this application. For a specific negotiation process for a UDP/TCP connection, refer to the foregoing implementation. This is not limited herein.

In one case, if the gateway device with which the negotiation is performed in S605 successfully returns a response, in other words, the negotiation succeeds, but the negotiation in S606 fails, the platform server still deletes the negotiation result in S605. To be specific, the platform server sends negotiation deletion information to the gateway device based on the network registration information of the first terminal. If the gateway device corresponding to the first terminal completes the deletion, the gateway device returns a deletion response to the platform server.

If the negotiation in both S605 and S606 succeeds, S607 is performed.

S607: The platform server sends a creation success response to the first terminal.

Based on the foregoing implementation, if QoS in the network changes, a notify report (Notify Report) is used to notify the platform server.

Optionally, after a first device creates, based on the quality of service creation message, the quality of service information associated with the service, the first device receives a quality change message sent by the gateway device. The quality change notification message includes a terminal identifier, a quality of service status (QoS Status), flow information (Flow Info), and the like. Further, the first device checks, based on the terminal identifier, quality of service information corresponding to the terminal identifier in the quality of service information associated with the service, and determines, based on the quality of service information corresponding to the terminal identifier in the quality of service information associated with the service, whether to re-negotiate the quality of service information.

In a specific implementation process, the first device checks, based on the terminal identifier and the Flow Info, previously created quality of service information associated with a service, and obtains an Action (Action) corresponding to the QoS Status. If the Action is to trigger (trigger) a terminal, the first device sends device trigger (Device Trigger) information to the terminal based on the terminal identifier. If the Action is to Notify, the first device sends the QoS Status to the application server.

If the Action is to re-negotiate, re-negotiation is performed with the gateway device based on changed QoS (for example, a change of time or a change of a traffic volume). For a specific negotiation process, refer to the foregoing implementations, and details are not described herein again.

Further, the quality of service creation message in the foregoing implementation may be carried in a service request message. Optionally, when initiating a service, the application server may add a quality of service creation request to the service request message, for example, add a creation parameter "QoS Level" to the service request message, to indicate QoS guarantee required by the service request.

In this implementation, the QoS of the to-be-performed service may be directly indicated, so that the service is associated with the QoS.

After receiving the service request message, the first device negotiates with the gateway device with reference to the foregoing implementation.

When the first device is a platform server, after completing QoS negotiation with the gateway device, the first device forwards the service request message to the terminal, and the terminal performs the service.

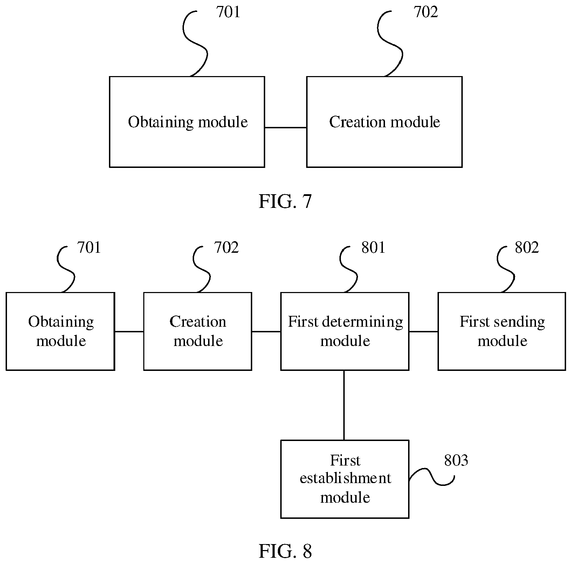

FIG. 7 is a schematic structural diagram of a service quality of service negotiation apparatus according to an implementation of this application. The apparatus may be integrated into the foregoing first device.

As shown in FIG. 7, the apparatus includes an obtaining module 701 and a creation module 702.

The obtaining module 701 is configured to obtain a quality of service creation message sent by an application server. The quality of service creation message includes a service identifier and quality of service information corresponding to the service identifier.

The creation module 702 is configured to create, based on the quality of service creation message, quality of service information associated with a service.

Optionally, the quality of service information includes one or more of the following: a quality of service level, entity information corresponding to the quality of service level, a time period corresponding to the quality of service level, a traffic volume corresponding to the quality of service level, and an operation corresponding to a quality of service status.

FIG. 8 is a schematic structural diagram of a service quality of service negotiation apparatus according to another implementation of this application. As shown in FIG. 8, when a first device is a platform server, the apparatus may further include a first determining module 801 and a first sending module 802.

The first determining module 801 is configured to determine network registration information of a first terminal.

The first sending module 802 is configured to send a quality of service negotiation message to a gateway device based on the network registration information of the first terminal. The quality of service negotiation message includes quality of service information corresponding to a traffic flow.

In an optional implementation, as shown in FIG. 8, the apparatus further includes a first establishment module 803.

In this implementation, the first determining module 801 is further configured to determine whether a TCP connection is established between the first terminal and the platform server. If the TCP connection is not established between the first terminal and the platform server, the first establishment module 803 is configured to initiate establishment of the TCP connection to the first terminal.

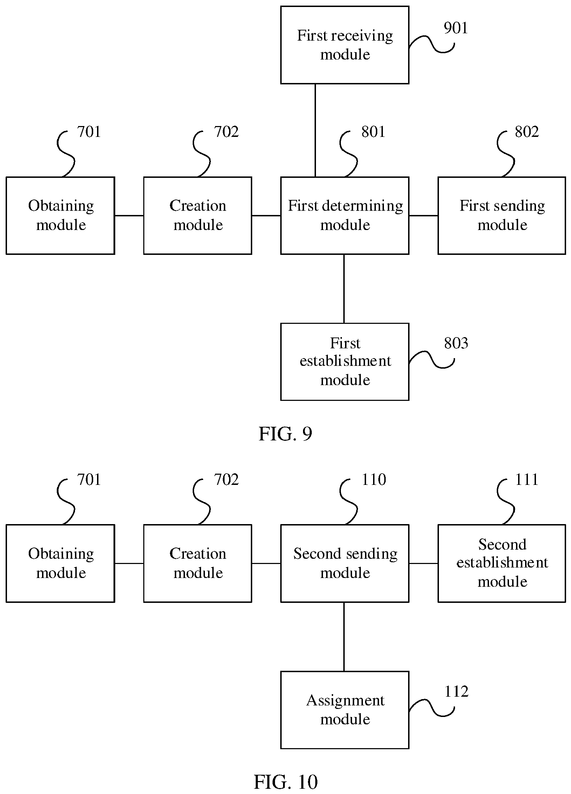

FIG. 9 is a schematic structural diagram of a service quality of service negotiation apparatus according to still another implementation of this application. As shown in FIG. 9, based on FIG. 8, the apparatus may further include a first receiving module 901.

The first receiving module 901 is configured to receive a service request sent by the application server. The service request includes an identifier of a to-be-performed service.

Correspondingly, in this implementation, the first determining module 801 is further configured to determine, based on the service request, whether the quality of service information associated with the service includes quality of service information corresponding to the to-be-performed service.

The first sending module 802 is specifically configured to: when the quality of service information associated with the service includes the quality of service information corresponding to the to-be-performed service, send the quality of service negotiation message to the gateway device based on the network registration information of the first terminal.

FIG. 10 is a schematic structural diagram of a service quality of service negotiation apparatus according to yet another implementation of this application. As shown in FIG. 10, based on FIG. 7, when the first device is a first terminal, the apparatus may further include a second sending module 110, configured to send a quality of service negotiation message to a gateway device. The quality of service negotiation message includes quality of service information corresponding to the traffic flow.

Referring to FIG. 10, in an optional solution, when a connection is established between the first terminal and the platform server by using the TCP, the apparatus may further include a second establishment module 111, configured to initiate, based on the quality of service creation message, establishment of the TCP connection to the platform server.

In another optional solution, when a user datagram protocol UDP connection is used between the first terminal and the platform server, as shown in FIG. 10, the apparatus may further include an assignment module 112, configured to assign a port number of the UDP connection based on the quality of service creation message.

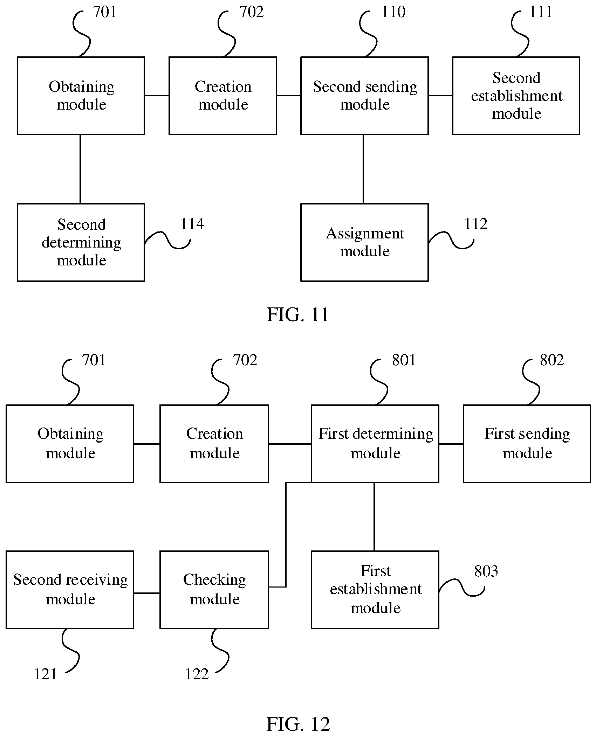

FIG. 11 is a schematic structural diagram of a service quality of service negotiation apparatus according to still yet another implementation of this application. As shown in FIG. 11, the apparatus may further include a second determining module 114.

The second determining module 114 is configured to determine quality of service of a to-be-performed service based on the quality of service information associated with the service.

The obtaining module 701 is further configured to obtain network information corresponding to the to-be-performed service.

The second sending module 110 is further configured to transmit service data of the to-be-performed service to a network device based on the quality of service of the to-be-performed service and the network information corresponding to the to-be-performed service.

FIG. 12 is a schematic structural diagram of a service quality of service negotiation apparatus according to a further implementation of this application. As shown in FIG. 12, the apparatus may further include a second receiving module 121 and a checking module 122.

The second receiving module 121 is configured to receive a quality change notification message sent by the gateway device. The quality change notification message includes a terminal identifier, a quality of service status, and flow information.

The checking module 122 is configured to check, based on the terminal identifier, quality of service information corresponding to the terminal identifier in the quality of service information associated with the service.

The first determining module 801 is further configured to determine, based on the quality of service information corresponding to the terminal identifier in the quality of service information associated with the service, whether to re-negotiate quality of service information.

Further, in the foregoing implementation, the quality of service creation message may be carried in a service request message.

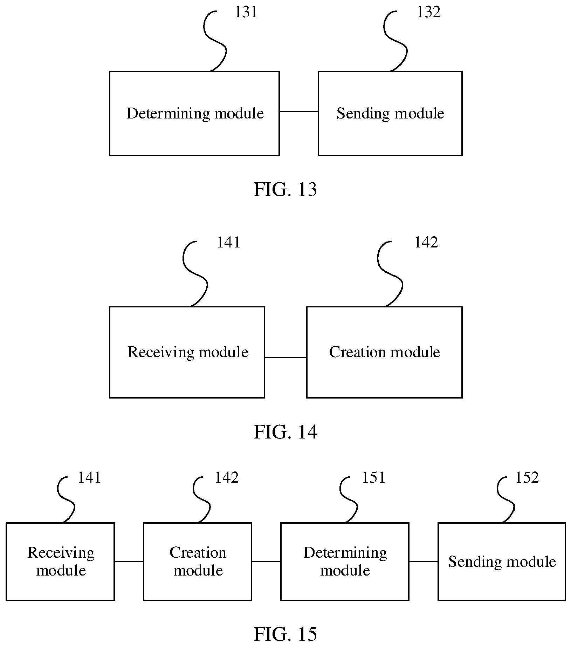

FIG. 13 is a schematic structural diagram of a service quality of service negotiation apparatus according to a still further implementation of this application. The apparatus may be integrated into the foregoing first terminal, and include a determining module 131 and a sending module 132.

The determining module 131 is configured to determine a quality of service creation message. The quality of service creation message includes a service identifier and quality of service information corresponding to the service identifier, and the quality of service information is quality of service information between the first terminal and a second terminal.

The sending module 132 is configured to send the quality of service creation message to a platform server.

FIG. 14 is a schematic structural diagram of a service quality of service negotiation apparatus according to a yet further implementation of this application. The apparatus may be integrated into a platform server. The apparatus may include a receiving module 141 and a creation module 142.

The receiving module 141 is configured to receive a quality of service creation message sent by a first terminal. The quality of service creation message includes a service identifier and quality of service information corresponding to the service identifier, and the quality of service information is quality of service information between the first terminal and a second terminal.

The creation module 142 is configured to create, based on the quality of service creation message, quality of service information associated with a service.

FIG. 15 is a schematic structural diagram of a service quality of service negotiation apparatus according to a still yet further implementation of this application. Based on FIG. 14, the apparatus may further include a determining module 151 and a sending module 152.

The determining module 151 is configured to determine network registration information of the first terminal and network registration information of the second terminal.

The sending module 152 is configured to: send, based on the network registration information of the first terminal, a first quality of service negotiation message to a gateway device corresponding to the first terminal; and send, based on the network registration information of the second terminal, a second quality of service negotiation message to a gateway device corresponding to the second terminal.

The apparatus is configured to implement the foregoing method implementation. Implementation principles and technical effects of the apparatus are similar to those of the method implementation. Details are not described herein again.

It should be noted and understood that division into the modules of the foregoing apparatus is merely logical function division. During actual implementation, some or all modules may be integrated into one physical entity, or the modules may be physically separated. In addition, these modules may be all implemented in a form of software invoked by a processing element, or may be all implemented in a form of hardware; or some modules may be implemented in a form of software invoked by a processing element, and some modules are implemented in a form of hardware. For example, the determining module may be a processing element separately disposed, or may be integrated in a chip of the foregoing apparatus for implementation. In addition, the determining module may alternatively be stored in a memory of the foregoing apparatus in a form of program code, and is invoked by a processing element of the foregoing apparatus to perform a function of the foregoing determining module. Implementations of other modules are similar to the implementation of the determining module. In addition, all or some of the modules may be integrated together, or may be implemented separately. The processing element herein may be an integrated circuit and has a signal processing capability. In an implementation process, steps in the foregoing methods or the foregoing modules can be implemented by using a hardware integrated logical circuit in the processing element, or by using instructions in a form of software.

For example, the foregoing modules may be configured as one or more integrated circuits implementing the foregoing methods, for example, one or more application-specific integrated circuits (Application Specific Integrated Circuit, ASIC), one or more microprocessors (digital signal processor, DSP), or one or more field programmable gate arrays (Field Programmable Gate Array, FPGA). For another example, when a module is implemented in a form of program code invoked by a processing element, the processing element may be a general-purpose processor, for example, a central processing unit (Central Processing Unit, CPU) or another processor that can invoke the program code. For another example, the modules may be integrated together, and implemented in a form of a system-on-a-chip (system-on-a-chip, SOC).

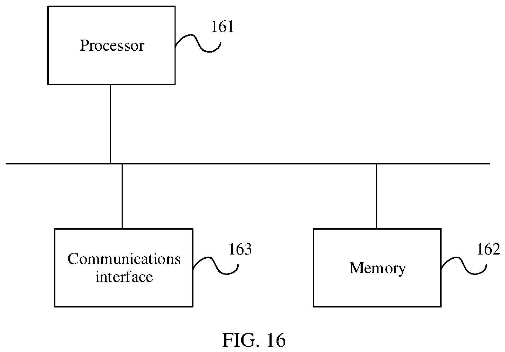

FIG. 16 is a schematic structural diagram of a service quality of service negotiation apparatus according to even yet another implementation of this application. As shown in FIG. 6, the apparatus includes a processor 161, a memory 162, and a communications interface 163.

The memory 162 may be an independent physical unit, and may be connected to the processor 161 and the communications interface 163 by using a bus. The memory 162 and the processor 161 may be integrated together, and implemented by using hardware, or the like.

The memory 162 is configured to store a program, and the program is used to implement the foregoing method implementations. The processor 161 invokes the program to perform operations performed by the foregoing apparatus in the method implementations.

The communications interface 163 is configured to perform wired or wireless communication with another device.

The apparatus may be integrated into the foregoing first device, and may be specifically integrated into a terminal, a platform server, or the like.

Optionally, when some or all of the service quality of service negotiation methods in the foregoing implementations are implemented by using software, the service quality of service negotiation apparatus may also include only a processor. The memory configured to store the program is located outside the apparatus. The processor is connected to the memory by using a circuit/wire, and is configured to read and execute the program stored in the memory.

The processor may be a central processing unit (central processing unit, CPU), a network processor (network processor, NP), or a combination of a CPU and an NP.

The processor may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field-programmable gate array, FPGA), a generic array logic (generic array logic, GAL), or any combination thereof.

The memory may include a volatile memory (volatile memory), for example, a random access memory (random-access memory, RAM); or the memory may include a non-volatile memory (non-volatile memory), for example, a flash memory (flash memory), a hard disk drive (hard disk drive, HDD), or a solid-state drive (solid-state drive, SSD); or the memory may include a combination of the foregoing types of memories.

The scope of protection shall be defined by the appended claims.

## Claims

1. A quality of service negotiation method, comprising:
obtaining (S201), by a negotiation device, a creation message sent by an application server, wherein the creation message comprises an identifier of a service and quality of service information of the service; and
creating (S202), by the negotiation device based on the creation message, quality of service information associated with the service;
wherein the quality of service information comprises one or more of the following: a quality of service level, entity information corresponding to the quality of service level, a time period corresponding to the quality of service level, a traffic volume corresponding to the quality of service level, and an operation corresponding to a quality of service status;
wherein:
the negotiation device is a platform server, and after the creating, by the negotiation device based on the creation message, quality of service information associated with a service, the method further comprises:
determining, by the negotiation device, network registration information of a first terminal; and
sending, by the negotiation device, a quality of service negotiation message to a gateway device based on the network registration information of the first terminal, wherein the quality of service negotiation message comprises quality of service information corresponding to a traffic flow;
wherein before the sending, by the negotiation device, a quality of service negotiation message to a gateway device based on the network registration information of the first terminal, the method further comprises:
receiving, by the negotiation device, a service request sent by the application server, wherein the service request comprises an identifier of a to-be-performed service; and
determining, by the negotiation device based on the service request, whether the quality of service information associated with the service comprises quality of service information corresponding to the to-be-performed service; and
correspondingly, the sending, by the negotiation device, a quality of service negotiation message to a gateway device based on the network registration information of the first terminal comprises:
when the quality of service information associated with the service comprises the quality of service information corresponding to the to-be-performed service, sending, by the negotiation device, the quality of service negotiation message to the gateway device based on the network registration information of the first terminal.

2. The method according to claim 1, wherein when a connection is established between the first terminal and the platform server by using the Transmission Control Protocol TCP,
before the sending, by the negotiation device, a quality of service negotiation message to a gateway device based on the network registration information of the first terminal, the method further comprises:
determining, by the negotiation device, whether the TCP connection is established between the first terminal and the platform server; and
if the TCP connection is not established between the first terminal and the platform server, initiating, by the negotiation device, establishment of the TCP connection to the first terminal.

3. The method according to claim 1 or 2, wherein after the creating, by the negotiation device based on the creation message, quality of service information associated with a service, the method further comprises:
determining, by the negotiation device, quality of service of a to-be-performed service based on the quality of service information associated with the service;
obtaining, by the first device, network information corresponding to the to-be-performed service; and
transmitting, by the first device, service data of the to-be-performed service to a network device based on the quality of service of the to-be-performed service and the network information corresponding to the to-be-performed service.

4. A quality of service negotiation apparatus, wherein the apparatus is integrated into a negotiation device, and the apparatus comprises means for:
obtaining a creation message sent by an application server, wherein the creation message comprises an identifier of a service and quality of service information of the service; and
creating, based on the creation message, quality of service information associated with the service;
wherein the quality of service information comprises one or more of the following: a quality of service level, entity information corresponding to the quality of service level, a time period corresponding to the quality of service level, a traffic volume corresponding to the quality of service level, and an operation corresponding to a quality of service status;
wherein:
the negotiation device is a platform server, and the apparatus further comprises means for after the creating, by the negotiation device based on the creation message, quality of service information associated with a service:
determining network registration information of a first terminal; and
sending a quality of service negotiation message to a gateway device based on the network registration information of the first terminal, wherein the quality of service negotiation message comprises quality of service information corresponding to a traffic flow;
wherein the apparatus further comprises means for, before the sending a quality of service negotiation message to a gateway device based on the network registration information of the first terminal:
receiving a service request sent by the application server, wherein the service request comprises an identifier of a to-be-performed service; and
determining, based on the service request, whether the quality of service information associated with the service comprises quality of service information corresponding to the to-be-performed service; and
correspondingly, the sending a quality of service negotiation message to a gateway device based on the network registration information of the first terminal comprises:
when the quality of service information associated with the service comprises the quality of service information corresponding to the to-be-performed service, sending the quality of service negotiation message to the gateway device based on the network registration information of the first terminal.

5. The apparatus according to claim 4, wherein when a connection is established between the first terminal and the platform server by using the Transmission Control Protocol TCP, the apparatus further comprises means for:
before the sending a quality of service negotiation message to a gateway device based on the network registration information of the first terminal:
determining whether the TCP connection is established between the first terminal and the platform server; and
if the TCP connection is not established between the first terminal and the platform server, initiating establishment of the TCP connection to the first terminal.

6. The apparatus according to claim 4 or 5, wherein the apparatus further comprises means for after the creating, based on the creation message, quality of service information associated with a service:
determining quality of service of a to-be-performed service based on the quality of service information associated with the service;
obtaining network information corresponding to the to-be-performed service; and
transmitting service data of the to-be-performed service to a network device based on the quality of service of the to-be-performed service and the network information corresponding to the to-be-performed service.

## Patentansprüche

1. Verfahren zur Dienstqualitätsverhandlung, umfassend:
Erlangen (S201), durch eine Verhandlungsvorrichtung, einer von einem Anwendungsserver gesendeten Erstellungsnachricht, wobei die Erstellungsnachricht eine Kennung eines Dienstes und Dienstqualitätsinformationen des Dienstes umfasst; und
Erstellen (S202), durch die Verhandlungsvorrichtung, basierend auf der Erstellungsnachricht, von Dienstqualitätsinformationen, die dem Dienst zugeordnet sind;
wobei die Dienstqualitätsinformationen eines oder mehrere der Folgenden umfassen: ein Dienstqualitätsniveau, Entitätsinformationen, die dem Dienstqualitätsniveau entsprechen, einen Zeitraum, der dem Dienstqualitätsniveau entspricht, ein Verkehrsaufkommen, das dem Dienstqualitätsniveau entspricht, und eine Operation, die einem Dienstqualitätsstatus entspricht;
wobei:
die Verhandlungsvorrichtung ein Plattformserver ist und das Verfahren nach dem Erstellen, durch die Verhandlungsvorrichtung basierend auf der Erstellungsnachricht, von Dienstqualitätsinformationen, die einem Dienst zugeordnet sind, ferner Folgendes umfasst:
Bestimmen, durch die Verhandlungsvorrichtung, von Netzwerkregistrierungsinformationen eines ersten Endgeräts; und
Senden, durch die Verhandlungsvorrichtung, einer Dienstqualitätsverhandlungsnachricht an eine Gateway-Vorrichtung basierend auf den Netzwerkregistrierungsinformationen des ersten Endgeräts, wobei die Dienstqualitätsverhandlungsnachricht Dienstqualitätsinformationen, die einem Verkehrsfluss entsprechen, umfasst;
wobei das Verfahren vor dem Senden, durch die Verhandlungsvorrichtung, einer Dienstqualitätsverhandlungsnachricht an eine Gateway-Vorrichtung basierend auf den Netzwerkregistrierungsinformationen des ersten Endgeräts ferner Folgendes umfasst:
Empfangen, durch die Verhandlungsvorrichtung, einer von dem Anwendungsserver gesendeten Dienstanforderung, wobei die Dienstanforderung eine Kennung eines auszuführenden Dienstes umfasst; und
Bestimmen, durch die Verhandlungsvorrichtung basierend auf der Dienstanforderung, ob Dienstqualitätsinformationen, die dem Dienst zugeordnet sind, Dienstqualitätsinformationen, die dem auszuführenden Dienst entsprechen, umfassen; und
entsprechend das Senden, durch die Verhandlungsvorrichtung, einer Dienstqualitätsverhandlungsnachricht an eine Gateway-Vorrichtung basierend auf den Netzwerkregistrierungsinformationen des ersten Endgeräts Folgendes umfasst:
wenn die Dienstqualitätsinformationen, die dem Dienst zugeordnet sind, die Dienstqualitätsinformationen, die dem auszuführenden Dienst entsprechen, umfassen, Senden, durch die Verhandlungsvorrichtung, der Dienstqualitätsverhandlungsnachricht an die Gateway-Vorrichtung basierend auf den Netzwerkregistrierungsinformationen des ersten Endgeräts.

2. Verfahren nach Anspruch 1, wobei, wenn eine Verbindung zwischen dem ersten Endgerät und dem Plattformserver unter Verwendung des Transmission Control Protocol TCP aufgebaut wird,
das Verfahren vor dem Senden, durch die Verhandlungsvorrichtung, einer Dienstqualitätsverhandlungsnachricht an eine Gateway-Vorrichtung basierend auf den Netzwerkregistrierungsinformationen des ersten Endgeräts ferner Folgendes umfasst:
Bestimmen, durch die Verhandlungsvorrichtung, ob die TCP-Verbindung zwischen dem ersten Endgerät und dem Plattformserver hergestellt wurde; und
wenn die TCP-Verbindung zwischen dem ersten Endgerät und dem Plattformserver nicht hergestellt wurde, Initiieren, durch die Verhandlungsvorrichtung, der Herstellung der TCP-Verbindung zu dem ersten Endgerät.

3. Verfahren nach Anspruch 1 oder 2, wobei das Verfahren nach dem Erstellen, durch die Verhandlungsvorrichtung basierend auf der Erstellungsnachricht, der Dienstqualitätsinformationen, die einem Dienst zugeordnet sind, ferner Folgendes umfasst:
Bestimmen, durch die Verhandlungsvorrichtung, der Dienstqualität eines auszuführenden Dienstes basierend auf den Dienstqualitätsinformationen, die dem Dienst zugeordnet sind;
Erlangen, durch die erste Vorrichtung, von Netzwerkinformationen, die dem auszuführenden Dienst entsprechen; und
Übertragen, durch die erste Vorrichtung, von Dienstdaten des auszuführenden Dienstes an eine Netzwerkvorrichtung basierend auf der Dienstqualität des auszuführenden Dienstes und den Netzwerkinformationen, die dem auszuführenden Dienst entsprechen.

4. Dienstqualitätsverhandlungsvorrichtung, wobei die Vorrichtung in eine Verhandlungsvorrichtung integriert ist und die Vorrichtung Mittel für Folgendes umfasst:
Erlangen einer durch einen Anwendungsserver gesendeten Erstellungsnachricht, wobei die Erstellungsnachricht eine Kennung eines Dienstes und Dienstqualitätsinformation des Dienstes umfasst; und
Erstellen, basierend auf der Erstellungsnachricht, von Dienstqualitätsinformationen, die dem Dienst zugeordnet sind;
wobei die Dienstqualitätsinformationen eines oder mehrere der Folgenden umfassen: ein Dienstqualitätsniveau, Entitätsinformationen, die dem Dienstqualitätsniveau entsprechen, einen Zeitraum, der dem Dienstqualitätsniveau entspricht, ein Verkehrsaufkommen, das dem Dienstqualitätsniveau entspricht, und eine Operation, die einem Dienstqualitätsstatus entspricht;
wobei:
die Verhandlungsvorrichtung ein Plattformserver ist und die Vorrichtung ferner Mittel zu Folgendem nach dem Erstellen von Dienstqualitätsinformationen, die einem Dienst zugeordnet sind, durch die Verhandlungsvorrichtung basierend auf der Erstellungsnachricht umfasst:
Bestimmen von Netzwerkregistrierungsinformationen eines ersten Endgeräts; und
Senden einer Dienstqualitätsverhandlungsnachricht an eine Gateway-Vorrichtung basierend auf den Netzwerkregistrierungsinformationen des ersten Endgeräts, wobei die Dienstqualitätsverhandlungsnachricht Dienstqualitätsinformationen, die einem Verkehrsfluss entsprechen, umfasst;
wobei die Vorrichtung ferner Mittel für Folgendes vor dem Senden einer Dienstqualitätsverhandlungsnachricht an eine Gateway-Vorrichtung basierend auf den Netzwerkregistrierungsinformationen des ersten Endgeräts umfasst:
Empfangen einer von dem Anwendungsserver gesendeten Dienstanforderung, wobei die Dienstanforderung eine Kennung eines auszuführenden Dienstes umfasst; und
Bestimmen, basierend auf der Dienstanforderung, ob die Dienstqualitätsinformationen, die dem Dienst zugeordnet sind, Dienstqualitätsinformationen umfassen, die dem auszuführenden Dienst entsprechen; und
entsprechend das Senden einer Dienstqualitätsverhandlungsnachricht an eine Gateway-Vorrichtung basierend auf den Netzwerkregistrierungsinformationen des ersten Endgeräts Folgendes umfasst:
wenn die Dienstqualitätsinformationen, die dem Dienst zugeordnet sind, die Dienstqualitätsinformationen, die dem auszuführenden Dienst entsprechen, umfassen, Senden der Dienstqualitätsverhandlungsnachricht an die Gateway-Vorrichtung basierend auf den Netzwerkregistrierungsinformationen des ersten Endgeräts.

5. Vorrichtung nach Anspruch 4, wobei, wenn eine Verbindung zwischen dem ersten Endgerät und dem Plattformserver unter Verwendung des Transmission Control Protocol TCP hergestellt wird, die Vorrichtung ferner Mittel für Folgendes umfasst:
vor dem Senden einer Dienstqualitätsverhandlungsnachricht an eine Gateway-Vorrichtung basierend auf den Netzwerkregistrierungsinformationen des ersten Endgeräts:
Bestimmen, ob die TCP-Verbindung zwischen dem ersten Endgerät und dem Plattformserver hergestellt wurde; und
wenn die TCP-Verbindung zwischen dem ersten Endgerät und dem Plattformserver nicht hergestellt wurde, Initiieren der Herstellung der TCP-Verbindung zu dem ersten Endgerät.

6. Vorrichtung nach Anspruch 4 oder 5, wobei die Vorrichtung ferner Mittel zu Folgendem nach dem Erstellen von Dienstqualitätsinformationen, die einem Dienst zugeordnet sind, basierend auf der Erstellungsnachricht umfasst:
Bestimmen der Dienstqualität eines auszuführenden Dienstes basierend auf den Dienstqualitätsinformationen, die dem Dienst zugeordnet sind;
Erlangen von Netzwerkinformationen, die dem auszuführenden Dienst entsprechen; und
Übertragen von Dienstdaten des auszuführenden Dienstes an eine Netzwerkvorrichtung basierend auf der Dienstqualität des auszuführenden Dienstes und den Netzwerkinformationen, die dem auszuführenden Dienst entsprechen.

## Revendications

1. Procédé de négociation de qualité de service, comprenant :
l'obtention (S201), par un dispositif de négociation, d'un message de création envoyé par un serveur d'application, dans lequel le message de création comprend un identifiant d'un service et des informations de qualité de service du service ; et
la création (S202), par le dispositif de négociation sur la base du message de création, des informations de qualité de service associées au service ;
dans lequel les informations de qualité de service comprennent un ou plusieurs des éléments suivants : un niveau de qualité de service, des informations d'entité correspondant au niveau de qualité de service, une période de temps correspondant au niveau de qualité de service, un volume de trafic correspondant au niveau de qualité de service, et une opération correspondant à un état de qualité de service ;
dans lequel :
le dispositif de négociation est un serveur de plateforme, et après la création, par le dispositif de négociation sur la base du message de création, d'informations de qualité de service associées à un service, le procédé comprend également :
la détermination, par le dispositif de négociation, des informations d'enregistrement de réseau d'un premier terminal ; et
l'envoi, par le dispositif de négociation, d'un message de négociation de qualité de service à un dispositif passerelle sur la base des informations d'enregistrement de réseau du premier terminal, dans lequel le message de négociation de qualité de service comprend des informations de qualité de service correspondant à un flux de trafic ;
dans lequel avant l'envoi, par le dispositif de négociation, d'un message de négociation de qualité de service à un dispositif passerelle sur la base des informations d'enregistrement réseau du premier terminal, le procédé comprend également :
la réception, par le dispositif de négociation, d'une demande de service envoyée par le serveur d'application, dans lequel la demande de service comprend un identifiant d'un service à exécuter ; et
le fait de déterminer, par le dispositif de négociation sur la base de la demande de service, si les informations de qualité de service associées au service comprennent des informations de qualité de service correspondant au service à exécuter ; et
l'envoi de manière respective, par le dispositif de négociation, d'un message de négociation de qualité de service à un dispositif passerelle sur la base des informations d'enregistrement de réseau du premier terminal comprend :
lorsque les informations de qualité de service associées au service comprennent les informations de qualité de service correspondant au service à exécuter, l'envoi, par le dispositif de négociation, du message de négociation de qualité de service au dispositif passerelle sur la base des informations d'enregistrement de réseau du premier terminal.

2. Procédé selon la revendication 1, dans lequel lorsqu'une connexion est établie entre le premier terminal et le serveur de plateforme en utilisant le protocole de contrôle de transmissions, TCP,
avant l'envoi, par le dispositif de négociation, d'un message de négociation de qualité de service à un dispositif passerelle sur la base des informations d'enregistrement de réseau du premier terminal, le procédé comprend également :
le fait de déterminer, par le dispositif de négociation, si la connexion TCP est établie entre le premier terminal et le serveur de plateforme ; et
si la connexion TCP n'est pas établie entre le premier terminal et le serveur de plateforme, le lancement, par le dispositif de négociation, de l'établissement de la connexion TCP au premier terminal.

3. Procédé selon la revendication 1 ou 2, dans lequel après la création, par le dispositif de négociation sur la base du message de création, d'informations de qualité de service associées à un service, le procédé comprend également :
la détermination, par le dispositif de négociation, de la qualité de service d'un service à exécuter sur la base des informations de qualité de service associées au service ;
l'obtention, par le premier dispositif, des informations de réseau correspondant au service à exécuter ; et
la transmission, par le premier dispositif, des données de service du service à exécuter à un dispositif de réseau sur la base de la qualité de service du service à exécuter et des informations de réseau correspondant au service à exécuter.

4. Appareil de négociation de qualité de service, dans lequel l'appareil est intégré dans un dispositif de négociation, et l'appareil comprend des moyens pour :
l'obtention d'un message de création envoyé par un serveur d'application, dans lequel le message de création comprend un identifiant d'un service et des informations de qualité de service du service ; et
la création, sur la base du message de création, des informations de qualité de service associées au service ;
dans lequel les informations de qualité de service comprennent un ou plusieurs des éléments suivants : un niveau de qualité de service, des informations d'entité correspondant au niveau de qualité de service, une période de temps correspondant au niveau de qualité de service, un volume de trafic correspondant au niveau de qualité de service, et une opération correspondant à un état de qualité de service ;
dans lequel :
le dispositif de négociation est un serveur de plateforme, et l'appareil comprend également des moyens pour après la création, par le dispositif de négociation sur la base du message de création, d'informations de qualité de service associées à un service :
la détermination des informations d'enregistrement de réseau d'un premier terminal ; et
l'envoi d'un message de négociation de qualité de service à un dispositif passerelle sur la base des informations d'enregistrement de réseau du premier terminal, dans lequel le message de négociation de qualité de service comprend des informations de qualité de service correspondant à un flux de trafic ;
dans lequel l'appareil comprend également des moyens pour, avant l'envoi d'un message de négociation de qualité de service à un dispositif passerelle sur la base des informations d'enregistrement de réseau du premier terminal :
la réception d'une demande de service envoyée par le serveur d'application, dans lequel la demande de service comprend un identifiant d'un service à exécuter ; et
le fait de déterminer, sur la base de la demande de service, si les informations de qualité de service associées au service comprennent des informations de qualité de service correspondant au service à exécuter ; et
l'envoi de manière respective d'un message de négociation de qualité de service à un dispositif passerelle sur la base des informations d'enregistrement de réseau du premier terminal comprend :
lorsque les informations de qualité de service associées au service comprennent les informations de qualité de service correspondant au service à exécuter, l'envoi du message de négociation de qualité de service au dispositif passerelle sur la base des informations d'enregistrement de réseau du premier terminal.

5. Appareil selon la revendication 4, dans lequel lorsqu'une connexion est établie entre le premier terminal et le serveur de plateforme en utilisant le protocole de contrôle de transmission TCP, l'appareil comprend également des moyens pour :
avant l'envoi d'un message de négociation de qualité de service à un dispositif passerelle sur la base des informations d'enregistrement de réseau du premier terminal :
le fait de déterminer si la connexion TCP est établie entre le premier terminal et le serveur de plateforme ; et
si la connexion TCP n'est pas établie entre le premier terminal et le serveur de plateforme, le lancement de l'établissement de la connexion TCP au premier terminal.

6. Appareil selon la revendication 4 ou 5, dans lequel l'appareil comprend également des moyens pour après la création, sur la base du message de création, d'informations de qualité de service associées à un service :
la détermination de la qualité de service d'un service à exécuter sur la base des informations de qualité de service associées au service ;
l'obtention des informations de réseau correspondant au service à exécuter ; et
la transmission des données de service du service à exécuter à un dispositif de réseau sur la base de la qualité de service du service à exécuter et des informations de réseau correspondant au service à exécuter.
